# EUROPÄISCHE PATENTSCHRIFT

(11) **EP 1 214 011 B1**
(45) Veröffentlichungstag und Bekanntmachung des Hinweises auf die Patenterteilung: **26.01.2005**
(21) Anmeldenummer: 00967555.4
(22) Anmeldetag: 11.09.2000
(51) Int. Cl.: A61C 1/00

(54) **PNEUMATISCH-ELEKTRISCHER WANDLER FÜR DENTALE EINRICHTUNGEN**
PNEUMATIC-ELECTRIC CONVERTER FOR DENTAL INSTRUMENTS
CONVERTISSEUR PNEUMATIQUE-ELECTRIQUE POUR DISPOSITIFS DENTAIRES

(30) Priorität: 10.09.1999 DE 19943474
(43) Veröffentlichungstag der Anmeldung: 19.06.2002
(73) Patentinhaber: Sirona Dental Systems GmbH, 64625 Bensheim (DE)
(72) Erfinder: ALTENDORF, Hans-Walter, 67551 Worms (DE); LEHMANN, Karl-Heinz, 64625 Bensheim (DE)
(74) Vertreter: Sommer, Peter
(86) Internationale Anmeldenummer: PCT/DE2000/003150
(87) Internationale Veröffentlichungsnummer: WO 2001/019276

(56) Entgegenhaltungen:
- DE-A- 2 417 890
- US-A- 4 316 130

## Beschreibung

Die Erfindung bezieht sich auf eine zahnärztliche Einrichtung entsprechend dem Oberbegriff des Anspruchs 1 und auf ein Verfahen zu deren Steuerung gemäß Anspruch 9.

Aus DE 24 17 890 ist eine zahnärztliche Einrichtung bekannt geworden, bei der mindestens ein zahnärztliches Handstück mit einem aus einer Druckluftquelle über eine Druckluftleitung gespeisten Druckluftmotorantrieb verbunden ist. Die Drehzahl kann mittels eines die Druckluft steuernden Steuerventils über eine pneumatische, vorzugsweise in Form eines Fußschalters ausgebildete Steuereinrichtung verändert werden. Bei Verwendung eines weiteren Handstückes mit einem Elektromotorantrieb, der über ein elektrisches Schaltglied ein- und ausschaltbar und dessen Drehzahl mittels eines elektrischen Steuerglieds steuerbar ist, sind Druckumsetzer eingebaut, welche die vom Steuerventil gesteuerte Druckluft für den Druckluftmotorantrieb derart steuern, dass ein elektrisches Steuerglied des Elektromotorantriebes beeinflusst wird. Am Elektromotorantrieb wird die Drehzahl über ein als Schleifkontakt ausgeführtes elektrisches Steuerglied variiert.

Es hat sich herausgestellt, dass bei mittels Fußsteuerung in der Drehzahl beeinflussbaren pneumatischen zahnärztlichen Geräten bei kleinen Drücken der am Fußschalter zurückzulegende Weg größer ist, um eine entsprechende Drehzahländerung am zahnärztlichen Handstück herbeizuführen. Dies bezieht sich jedoch nur auf pneumatisch betreibbare zahnärztliche Handstücke. Bei größeren Drücken ist bereits eine kleine Wegänderung am Fußschalter ausreichend, um eine Änderung der Drehzahl am pneumatisch zu betreibenden zahnärztlichen Handstück herbeizuführen. Das diesem Ansprechverhalten zugrundeliegende subjektive Empfinden des Zahnarztes lässt sich nur durch eine nichtlineare Kennlinie annähern, die daher auch für elektrisch betreibbare Handstücke erstrebenswert ist.

Um zu einer solcherart verlaufenden Kennlinie zu gelangen, die beispielsweise mit käuflichen Druckwandlern nicht ohne weiteres verwirklicht werden kann, müssten elektronische Bauteile (Mikroprozessoren, nichtlineare Analogschaltungen) eingesetzt werden, um das Signal umzuformen. Die elektrisch betreibbaren Handstücke möchte der Zahnarzt ebenfalls mit der pneumatischen Fußsteuerung betätigen, so dass dafür Sorge zu tragen ist, dass das Drehzahlverhalten der elektrisch betreibbaren Handstücke dem der pneumatisch betreibbaren Handstücke entspricht, so dass der Arzt idealerweise mittels seines gewohnten Bedienverhaltens der Fußsteuerung beider Handstücke, ungeachtet, ob es sich um ein pneumatisch betreibbares Handstück oder ein elektrisch betreibbares Handstück handelt, bedienen kann.

Der Erfindung liegt die Aufgabe zugrunde, das Signal einer pneumatisch beaufschlagten Fußsteuerung so umzusetzen, dass die elektrisch betreibbaren Handstücke sich proportional zu einem pneumatisch angetriebenen Handstück verhalten.

Erfindungsgemäß wird diese Aufgabe dadurch gelöst, dass an einer zahnärztlichen Einrichtung mit mindestens einem elektrisch betreibbaren Handstück, dessen Drehzahl mit einem pneumatischen Fußanlasser beeinflussbar sein soll, wobei die nach dem Steuerglied anliegende Druckluft die Steuerung des elektrischen Antriebes beeinflusst, ein Verlaufsfilter vorgesehen ist, der an einen pneumatisch beaufschlagten Hohlkörper aufgenommen ist, wobei am Verlaufsfilter Bereiche ausgebildet sind, die von einer ein elektrisches Signal in Abhängigkeit von den Eigenschaften der Bereiche generierenden Lichtschranke abtastbar sind.

Mit der erfindungsgemäßen Lösung lässt sich eine Bedienung sowohl eines pneumatisch antreibbaren als auch eines elektrisch antreibbaren Handstückes über eine beiden gemeinsame Fußsteuerung herbeiführen, wobei sowohl das Ansprechverhalten des pneumatisch antreibbaren Handstückes als auch das Ansprechverhalten des elektrisch antreibbaren Handstückes durch Wegänderungen am Fußschalter dem durch eine nichtlineare Kennlinie am besten angenäherten subjektiven Empfinden des Arztes nachgebildet sind. Mittels eines p/I-Analogwandlers lassen sich bei geringen Drücken und großen Wegen am Fußschalter geringe Stromstärkeänderungen und damit geringe Drehzahländerungen am elektrisch antreibbaren Handstück realisieren.

In vorteilhafter Weise ist der Verlaufsfilter als Transmissionsscheibe ausgebildet. Diese in Sektoren unterschiedlicher Oberflächenbeschaffenheit aufgeteilte Scheibe kann beispielsweise in jedem ihrer drei oder mehreren Sektoren mit einem unterschiedlichen Schwärzungsgrad versehen sein. Dadurch lassen sich unterschiedliche optische Dichten zwischen 0 und 4 liegend realisieren. Die Schwärzungsgrade lassen sich beispielsweise durch Bearbeitung der als Verlaufsfilter dienenden Transmissionsscheibe mittels eines Lasers herbeiführen.

In weiterer Ausgestaltung des der Erfindung zugrundeliegenden Gedankens ist der pneumatisch beaufschlagbare Hohlkörper als eine Hohlfeder ausgebildet, an deren Achse sich die Transmissionsscheibe befestigen lässt. Der pneumatisch beaufschlagbare Hohlkörper ist Teil eines p/I-Analogwandlers, dessen Druckkammer mit dem Hohlkörper, der als Hohlfeder ausgestaltet sein kann, in Verbindung steht. Durch die flexible Hohlfeder kann eine dem Druck im p/I-Wandler entsprechende Auslenkung des Verlaufsfilters um seine Achse erzeugt werden. Diese Auslenkbewegung des Verlaufsfilters wird durch eine Lichtschranke abgetastet, die den Rand und damit die mit unterschiedlicher Oberflächenbeschaffenheit ausgeführten Sektoren des Verlaufsfilters umschließt. Je nach Auslenkung des Verlaufsfilters um seine Achse detektiert die Lichtschranke einen bestimmten Sektorbereich, so dass ein diesem Sektorbereich entsprechendes elektrisches Signal durch die Lichtschranke generiert werden kann.

Ein ebenfalls erfindungsgemäßes Verfahren zur Steuerung der Drehzahlen eines elektrisch antreibbaren zahnärztlichen Handstücks welches neben einem pneumatisch antreibbaren zahnärztlichen Handstück an einem zahnärztlichen Gerät aufgenommen ist und welche über eine gemeinsame Fußber eine gemeinsame Fußsteuerung in ihrer Drehzahl regelbar sind, umfasst folgende Verfahrensschritte:
- das Anlegen des Treibluftdruckes am Eingang des p/I-Analogwandlers,
- das Auslenken eines Verlaufsfilters durch Verformung eines Hohlkörpers, der Teil des p/I-Analogwandlers ist,
- das Abtasten der Auslenkung des Verlaufsfilters durch eine diesem zugeordnete, ein elektrisches Signal generierende Lichtschranke und
- dem Bestimmen der Stromstärke [I] des p/I-Analogwandlers entsprechend einer progressiv verlaufenden Strom [I]-/Druck[p]-Kennlinie.

Mittels des erfindungsgemäß offenbarten Verfahrens lässt sich der Elektroantrieb des elektrisch antreibaren Handstückes über die Fußsteuerung mit einem Ansprechverhalten steuern, welches dem des über die Fußsteuerung ebenfalls ansteuerbaren pneumatisch antreibbaren Handstückes entspricht.

Im Bereich von Treibluftdrücken von 0 bis 1 bar nimmt die am Elektroantrieb vorgebbare Stromstärke proportional schwächer zu als bei Treibluftdrücken am p/I-Wandler, die oberhalb eines Druckes von 1 bar liegen.

Anhand einer Zeichnung sei die Erfindung nachstehend näher erläutert.

Es zeigt:
- Fig. 1: eine Explosionszeichnung eines erfindungsgemäßen p/I-Wandlers,
- Fig. 2: die Frontansicht des p/I-Wandlers,
- Fig. 3: die Seitenansicht des p/I-Wandlers gemäß Fig. 2,
- Fig. 4a-c: die Darstellung mehrerer Kennlinien.

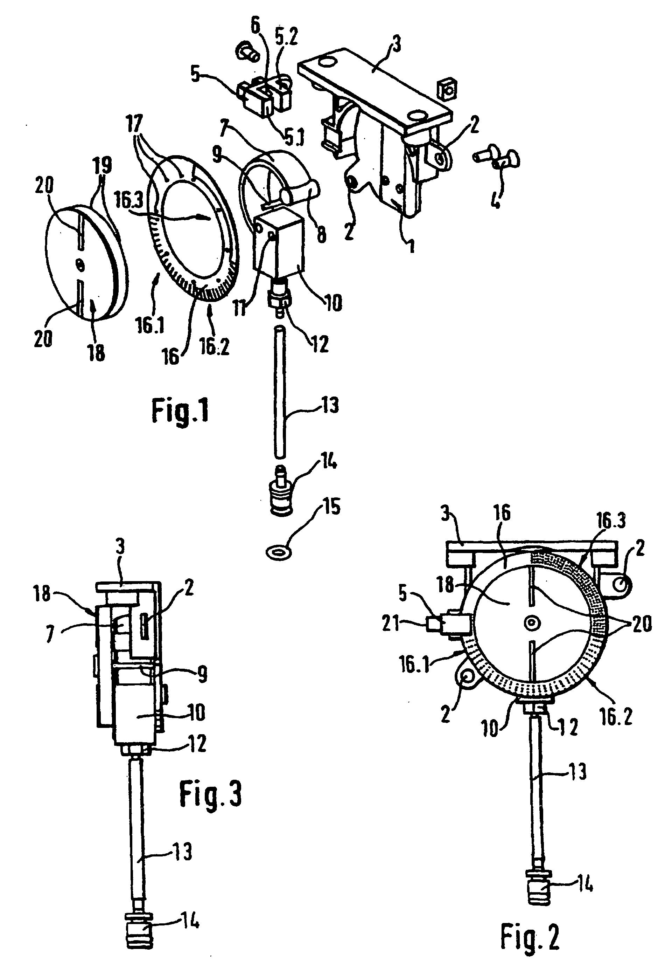

Fig. 1 zeigt eine Explosionszeichnung eines erfindungsgemäßen p/I-Analogwandlers.

An einem Trägerteil 1 ist oberhalb von Befestigungsbohrungen 2 ein aufgenommenes plattenförmiges Abschlussteil vorgesehen. Mittels Schrauben 4 kann das Trägerteil 1 eines Manometers am zugehörigen Panel befestigt werden. Im Trägerteil 1 befinden sich zwei Bohrungen, durch welche die Schrauben 4 durchgesteckt werden, um eine Druckkammer 10 eines p/I-Analogwandlers am Trägerteil 1 zu befestigen. Von der Druckkammer 10 des p/I-Analogwandlers aus erstreckt sich ein pneumatisch beaufschlagbarer Hohlkörper 7, der im in Fig. 1 angegebenen Ausführungsbeispiel als Hohlfeder ausgebildet ist. Die flexible Hohlfeder 7 mündet in einen Druckkörper 8, an dessen Vorderseite eine Achse 9 befestigt ist. An der Achse 9 werden die Anzeigescheibe 18 samt der daran befestigten Verlaufsfilters 16 aufgenommen.

Unterhalb der Druckkammer 10 des p/I-Analogwandlers ist über eine Eintrittsverschraubung 12 ein Schlauch 13 mit der Druckkammer 10 verbunden, der an seinem unteren Ende mit einem Nippel 14 samt Dichtring 15 versehen ist. Über die Schlauchleitung 13 steht der im pneumatischen Druckversorgungssystem anstehende Treibluftdruck an der Druckkammer 10 an.

Druckversorgungssystem anstehende Treibluftdruck an der Druckkammer 10 an.

Mittels einer Lichtschranke 5, die zwischen einem ersten Schenkel 5.1 und einem zweiten Schenkel 5.2 eine Ausnehmung 6 umfasst, wird die Auslenkung des an der Achse 9 des pneumatisch beaufschlagbaren Hohlkörpers 7 befestigten Verlaufsfilters 16 abgetastet. Der Verlaufsfilter 16 - im angegebenen Ausführungsbeispiel eine Transmissionsscheibe - ist in mehrere unterschiedliche Sektoren 16.1, 16.2 sowie 16.3 unterteilt. Anstelle der von hier dargestellten drei Sektoren 16.1, 16.2 und 16.3 können am Umfang der Transmissionsscheibe 16 auch eine größere Anzahl von Sektoren ausgebildet sein. Die Sektoren 16.1, 16.2 und 16.3 können beispielsweise einen Bereich von 10° bis 170° am Anfang der Transmissionsscheibe 16 überstreichen und eine in diesem Bereich von 0 auf 4 zunehmende optische Dichte aufweisen.

Die Druckkammer 10 des p/I-Analogwandlers misst einen Treibluftdruck im Bereich zwischen 0 und 4 bar und ist mit 6 bar belastbar. Der Drehzahlbereich am zahnärztlichen Handstück liegt für diesen Druckbereich zwischen 0 und 40.000 min⁻¹.

Die Lichtschranke 5 umschließt den Randbereich des Verlaufsfilters 16 mit einem ersten Schenkel 5.1 und einem zweiten Schenkel 5.2, zwischen denen die Ausnehmung 6 liegt. Der von der Lichtschranke 5 ausgehende Strahl kann beispielsweise ein Infrarotstrahl sein einer Wellenlänge von 935 ±5 nm. Der Infrarotstrahl wird durch den die Ausnehmung 6 passierenden Sektor 16.1 oder 16.2 oder 16.3 wegabhängig gedämpft. Die wegabhängige Dämpfung lässt sich beispielsweise dadurch realisieren, dass der Sektoren 16.1, 16.2 und 16.3 mit unterschiedlichen Schwärzungsgrad ausgeführt sind, die beispielsweise durch eine Bearbeitung der Transmissionsscheibe 16 mit einem Laser erreicht werden kann. Auch kann die Oberflächenbeschaffenheit der Sektoren 16.1, 16.2 und 16.3 mit unterschiedlichen Rauhigkeiten oder die Ausführung der Sektoren in unterschiedlicher Materialstärke vorgesehen werden, was ebenfalls mit einer Lichtschranke 5 abgetastet werden könnte.

Die als Verlaufsfilter dienende Transmissionsscheibe 16 ist mit einzelnen Bohrungen 17 versehen, in die Stifte 19 einer Anzeigescheibe 18 eingreifen. Auf der Vorderseite ist die Anzeigescheibe 18 mit einer Skalierung 20 versehen.

Fig. 2 zeigt die Vorderansicht des erfindungsgemäßen p/I-Analogwandlers.

Die von unten an die Druckkammer 10 heranreichende Leitung 13 beaufschlagt die Druckkammer 10 mit dem Treibluftdruck. Durch diesen erfährt der hinter dem Verlaufsfilter 16 liegende beauschlagbare Hohlkörper 7 (vergl. Fig. 1) eine Verformung, die an einer Verdrehung der als Verlaufsfilter 16 dienenden Transmissionsscheibe detektierbar ist. Aus der Frontansicht gemäß Fig. 2 geht hervor, dass die Transmissionsscheibe 16 mit drei Sektoren 16.1, 16.2 und 16.3 ausgestaltet sein kann, die einen jeweils unterschiedlichen Schwärzungsgrad aufweisen und daher einen sie an der Lichtschranke 5 durchdringenden Infrarotstrahl unterschiedlich dämpals Steuergröße für die Drehzahl des elektromotorischen Antrieb des elektrisch antreibbaren Handstückes herangezogen werden kann.

Fig. 3 zeigt die Seitenansicht des p/I-Analogwandlers. Aus dieser Figur geht hervor, dass das erfindungsgemäße Bauteil recht flach baut und die Druckkammer 10 für den Treibluftanschluss vom Trägerteil 1 und der diesen abdeckenden Platte 3 weitgehend umschlossen ist. Die Achse 9, um welche das Verlaufsfilter 16 bei Druckbeaufschlagung des Hohlkörpers 7 verdrehbar ist, liegt gemäß Fig. 3 fluchtend zur Achse der Anzeigescheibe 18.

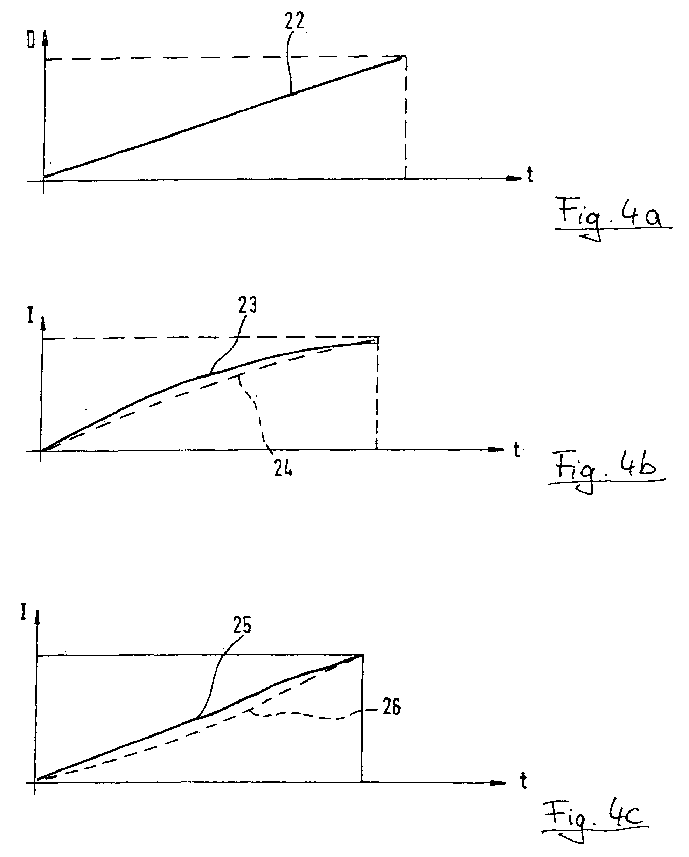

Mit der in Fig. 1 bis 3 beschriebenen Konfiguration eines p/I-Analogwandlers lässt sich ein Kennlinienverlauf erzielen, der dem in Fig. 4 mit dem Bezugszeichen 27 bezeichneten progressiven Kennlinienverlauf entspricht. Im Bereich von Treibluftdrücken, die unterhalb von 1 bar liegen, treten nur geringe Änderungen in der Stromstärke auf, während oberhalb von Drücken von 1 bar die Stromstärkeänderungen und damit die Drehzahländerungen am elektrisch betreibbaren zahnärztlichen Handstück größer sind.

Die Eichung des erfindungsgemäß vorgeschlagenen p/I-Analogwandlers lässt sich gemäß den Fig. 4a-c beispielsweise über eine in einem Mikrocontroller abgelegte Korrekturkurve 26 vornehmen.

Eine linear verlaufende Kennlinie, wie sie in Figur 4a mit der Position 22 dargestellt ist, ist nur näherungsweise durch eine in Fig. 4b dargestellte linear verlaufende Kennlinie 23 der Stromstärke abzubilden. Der ideale Verlauf 24 der Stromstärke kann aber durch eine in Fig. 4c dargestellte Korrekturkurve 26 erzielt werden, die im Rahmen einer an einem Mikrokontroller auszuführenden Eichung des p/I-Analogwandlers erfolgen kann. Mit den im Mikrocontroller abgelegten Korrekturwerten 26 lässt sich ein korrigierter Verlauf 25 der Stromstärke I über der Zeitachse errechnen.

Mittels des Verfahrens zur Steuerung der Drehzahlen eines pneumatisch antreibbaren Handstückes und eines elektrisch antreibbaren Handstückes über eine gemeinsame Fußsteuerung wird in der Zwischenschaltung des erfindungsgemäßen p/I-Analogwandlers ein Kennlinienverlauf erreicht, welcher den Bedienkomfort eines elektrisch betreibbaren Handstückes dadurch erhöht, dass dessen Ansprechverhalten auf die Steuerbefehle der Fußsteuerung dem Ansprechverhalten des pneumatisch antreibbaren Handstückes auf die Steuerbefehle durch die beiden Handstücken gemeinsamen Fußsteuerung angenähert ist.

## Patentansprüche

1. Zahnärztliche Einrichtung mit mindestens einem elektrisch betreibbaren Handstück, dessen Drehzahl mit einem als pneumatischen Fußanlasser ausgebildeten Steuerglied beeinflussbar ist, wobei die am Ausgang des pneumatischen Steuergliedes anliegende Druckluft die Steuerung des elektrischen Antriebes beeinflusst, **dadurch gekennzeichnet, dass** an einem Verlaufsfilter (16), der an einem pneumatisch beaufschlagten Hohlkörper aufgenommen ist, Bereiche (16.1, 16.2, 16.3) ausgebildet sind, die von einer ein elektrisches Signal (21) in Abhängigkeit von den Eigenschaften der Bereiche (16.1, 16.2, 16.3) generierenden Lichtschranke (5) abtastbar sind.

2. Zahnärztliche Einrichtung gemäß Anspruch 1, **dadurch gekennzeichnet, dass** der Verlaufsfilter (16) als Transmissionsscheibe ausgebildet ist.

3. Zahnärztliche Einrichtung gemäß Anspruch 1, **dadurch gekennzeichnet, dass** die Eigenschaften der Bereiche (16.1, 16.2, 16.3) deren Oberflächenbeschaffenheit sind.

4. Zahnärztliche Einrichtung gemäß Anspruch 1, **dadurch gekennzeichnet, dass** die Eigenschaften der Bereiche (16.1, 16.2, 16.3) deren Schwärzungsgrad sind.

5. Zahnärztliche Einrichtung gemäß Anspruch 4, **dadurch gekennzeichnet, dass** der Schwärzungsgrad kontinuierlich verläuft.

6. Zahnärztliche Einrichtung gemäß Anspruch 1, **dadurch gekennzeichnet, dass** der pneumatisch beaufschlagbare Hohlkörper (7) als Hohlfeder ausgebildet ist.

7. Zahnärztliche Einrichtung gemäß Anspruch 1, **dadurch gekennzeichnet, dass** der pneumatische beaufschlagbare Hohlkörper (7) Teil eines p/I-Analogwandlers (10) ist.

8. Zahnärztliche Einrichtung gemäß Anspruch 1, **dadurch gekennzeichnet, dass** die Bereiche (16.1, 16.2, 16.3) des Verlaufsfilters (16) von der das elektrische Signal (21) generierende Lichtschranke (5) umschlossen sind.

9. Verfahren zur Steuerung der Drehzahlen eines elektrisch antreibbaren zahnärztlichen Handstücks welches neben einem pneumatisch antreibbaren zahnärztlichen Handstück an einem zahnärztlichen Gerät aufgenommen ist und welches über eine gemeinsame Fußsteuerung in ihrer Drehzahl regelbar sind, mit folgenden Verfahrensschritten:
- dem Anlegen des Treibluftdruckes am Eingang (12) eines p/I-Analogwandlers (10),
- dem Auslenken eines Verlaufsfilters (16) durch Verformung eines Hohlkörpers (7), der Teil des p/I-Analogwandlers ist,
- dem Abtasten der Auslenkung des Verlaufsfilters (16) durch eine diesem zugeordnete, ein elektrisches Signal (21) generierende Lichtschranke (5) und
- dem Bestimmen der Stromstärke [I] des p/I-Analogwandlers entsprechend einer progressiv verlaufenden Strom [ I]-/Druck[ p] -Kennlinie (27).

10. Verfahren nach Anspruch 9, mit einstellbaren Treibluftdrücken von Null bis 4 bar, **dadurch gekennzeichnet, dass** im Bereich von Treibluftdrücken von Null bis 1 bar die Stromstärke proportional schwächer zunimmt als bei Treibluftdrücken oberhalb von 1 bar.

11. Verfahren nach Anspruch 9, **dadurch gekennzeichnet, dass** die Bestimmung der Stromstärke (I) des p/I-Analogwandlers über einen Mikrocontroller erfolgt, wobei die Korrekturkurve (25) in einem Speicher des Mikrocontrollers abgelegt ist.

## Claims

1. A dental system comprising at least one electrically driven handpiece whose rotary speed can be controlled by means of a control element in the form of a pneumatic foot switch, wherein the compressed air at the output of the pneumatic control element influences the regulator of the electric drive, **characterized in that** a variable filter (16) accommodated on a pneumatically controlled hollow body has sections (16.1,16.2,16.3) which can be scanned by a photoelectric barrier (5) that generates an electric signal (21) determined by the properties of said sections (16.1, 16.2, 16.3).

2. A dental system as defined in claim 1, **characterized in that** said variable filter (16) is in the form of a transmission disc.

3. A dental system as defined in claim 1, **characterized in that** said properties of said sections (16.1, 16.2, 16.3) are their surface properties.

4. A dental system as defined in claim 1, **characterized in that** said properties of said sections (16.1, 16.2, 16.3) are their optical density properties.

5. A dental system as defined in claim 4, **characterized in that** the optical density varies continuously.

6. A dental system as defined in claim 1, **characterized in that** said pneumatically controlled hollow body (7) is a hollow spring.

7. A dental system as defined in claim 1, **characterized in that** said pneumatically controlled hollow body (7) is a component of a p/I analog converter (10).

8. A dental system as defined in claim 1, **characterized in that** said sections (16.1, 16.2, 16.3) of said variable filter (16) are enclosed by said photoelectric barrier (5) generating said electric signal (21).

9. A method of regulating the rotary speed of an electrically driven dental handpiece which is accommodated in dental apparatus in addition to a pneumatically drivable dental handpiece, the rotary speed of both of said handpieces being controllable by a single foot control device, comprising the following process steps:
- applying pressurized air to the input (12) of a p/I analog converter (10),
- deflecting a variable filter (16) by causing deformation of a hollow body (7) forming a component of said p/I analog converter,
- scanning the deflection of the variable filter (16) by means of a photoelectric barrier (5) assigned thereto and adapted to generate an electric signal (21), and
- determining the current strength [I] of the p/I analog converter in accordance with a progressive curve (27) depicting current [I] as a function of pressure [p].

10. A method as defined in claim 9, in which the compressed air pressures can be varied from zero to 4 bar, **characterized in that** at compressed air pressures ranging from zero to 1 bar the current strength increases proportionately less steeply than at compressed air pressures above 1 bar.

11. A method as defined in claim 9, **characterized in that** the determination of the current strength (I) of said p/I analog converter is effected by a microcontroller, the correction curve (25) being stored in a storage device of said microcontroller.

## Revendications

1. Dispositif de dentisterie avec au moins un instrument à commande électrique, dont la vitesse de rotation peut être influencée par un organe de commande sous la forme d'une commande pneumatique à pédale, dans lequel l'air comprimé présent à la sortie de l'organe de commande pneumatique influence la commande de l'entraînement électrique, **caractérisé en ce que** des zones (16.1, 16.2, 16.3), qui peuvent être balayées par une barrière lumineuse (5) générant un signal électrique (21) en fonction des propriétés des zones (16.1, 16.2, 16.3), sont formées sur un filtre dégradé (16) qui est placé sur un corps creux sollicité de façon pneumatique.

2. Dispositif de dentisterie selon la revendication 1, **caractérisé en ce que** le filtre dégradé (16) est constitué par un disque de transmission.

3. Dispositif de dentisterie selon la revendication 1, **caractérisé en ce que** les propriétés des zones (16.1, 16.2, 16.3) sont l'état de surface de celles-ci.

4. Dispositif de dentisterie selon la revendication 1, **caractérisé en ce que** les propriétés des zones (16.1, 16.2, 16.3) sont la densité de celles-ci.

5. Dispositif de dentisterie selon la revendication 4, **caractérisé en ce que** la densité évolue de manière continue.

6. Dispositif de dentisterie selon la revendication 1, **caractérisé en ce que** le corps creux à sollicitation pneumatique (7) est un ressort creux.

7. Dispositif de dentisterie selon la revendication 1, **caractérisé en ce que** le corps creux à sollicitation pneumatique (7) fait partie d'un convertisseur analogique p/I (10).

8. Dispositif de dentisterie selon la revendication 1, **caractérisé en ce que** les zones (16.1, 16.2, 16.3) du filtre dégradé (16) sont entourées par la barrière lumineuse (5) générant le signal électrique (21).

9. Procédé de commande des vitesses de rotation d'un instrument de dentisterie à commande électrique qui est placé sur un appareil de dentisterie à côté d'un instrument de dentisterie à commande pneumatique et dont les vitesses de rotation sont réglables par une commande à pédale commune, comprenant les étapes suivantes:
- application de la pression de l'air d'entraînement à l'entrée (12) d'un convertisseur analogique p/I (10),
- déviation d' un filtre dégradé (16) par déformation d'un corps creux (7), qui fait partie du convertisseur analogique p/I,
- détection de la déviation du filtre dégradé (16) par une barrière lumineuse (5) associée à celui-ci et générant un signal électrique (21), et
- détermination de l'intensité du courant [I] du convertisseur analogique p/I selon une courbe caractéristique (27) à évolution progressive courant [ I] - pression [ p].

10. Procédé selon la revendication 9, avec des pressions de l'air d'entraînement réglables de zéro à 4 bars, **caractérisé en ce que** l'intensité du courant augmente proportionnellement plus faiblement dans la zone des pressions de l'air d'entraînement de zéro à 1 bar que pour des pressions de l'air d'entraînement supérieures à 1 bar.

11. Procédé selon la revendication 9, **caractérisé en ce que** la détermination de l'intensité du courant (I) du convertisseur analogique p/I est effectuée par un microcontrôleur, la courbe de correction (25) étant stockée dans une mémoire du microcontrôleur.
